# EUROPEAN PATENT APPLICATION

(11) **EP 2 048 816 A1**
(43) Date of publication of application: **15.04.2009**
(21) Application number: 07425641.3
(22) Date of filing: 12.10.2007
(51) Int. Cl.: H04L 12/24, H04L 12/56

(54) **Method and system for channel diversity protection in communication networks with distributed switching intelligence, corresponding network and computer program product**

(71) Applicant: Nokia Siemens Networks S.p.A., 20126 Milano (IT)
(72) Inventor: Aliotta, Mario, 20040 Roncello (IT); Santacesaria, Claudio, 20139 Milano (IT)
(74) Representative: Fischer, Michael

(57) **Abstract**

In a packet communication network, a stream of packets is transmissible between two nodes (M, N) over a transmission path therebetween selected out of two transmission paths (A, B) based on a switching decision taken by the receiving node (N) which acts as a decision making node. The decision is taken as a function of one or more quality parameter (BER. throughput, latency). The quality parameter is measured either locally at the decision making node (N) or at another measuring node located in one of the alternative transmission paths (A, B). In this latter case, the quality parameter is transmitted from the measuring node (A1, A2, A3, A4) to the decision node N) thus making it available for the switching decision.

## Description

### Field of the invention

The invention relates to communication networks and was devised with specific attention paid to its possible application to communication networks with distributed switching intelligence.

### Description of the related art

Ethernet and IP (Internet Protocol) networks are being increasingly used beyond the boundaries of their conventional fields of application, in areas such as e.g. the carrier domain where new requirements on link and path redundancy are to be complied with.

Standardization bodies have recently addressed this issue with several standards, a standard such as e.g. ITU-T G.8031 being a case in point.

This standard describes an end-to-end protection switching mechanism for path protection in a context where different paths may pass through different intermediate nodes. The corresponding protocol assumes wired connections and the underlying concept is a very simple one: continuity check messages keep the active path under control and, in case of failure, a fast switching to the protection path is triggered via messages carried on the protection path.

Other protocols such as IETF RFC 3619 resort to a similar approach in order to cope with ring topologies: a master node keeps the ring open by defining a primary port (active) and a secondary port (normally blocked); ring health messages verify the status of the link; in case of failure, which can be detected as a result of health messages being lost or following an explicit link down notification sent by any transit node to the master node, the master node enables its secondary port. This protocol is limited to ring topologies.

### Object and summary of the invention

The inventors have noted that e.g. no protocol is known so far that allows path protection and wherein the decision is taken by one node while the information on the quality of the path is available at a different node of the path.

All known protocols (with the possible exception of protocols for ring protection, which rely on a different approach with respect to path protection) assume that the decision node can take local decisions and has all information to do that. Moreover, known protocols assume that the decision should be made on the basis of a path failure detection (such as continuity check) and do not consider the quality of the link.

The need is therefore felt for improved arrangements where these shortcomings are definitely dispensed with. Specifically, the problem needs to be addressed of performing an instantaneous switching based on quality and performance parameters in addition to pure link failure detection while, at the same time, covering the case where the information for decision is not available at the switching node.

The object of the invention is thus to provide a fully satisfactory response to these needs.

According to the present invention, that object is achieved by means of a method having the features set forth in the claims that follow. The invention also relates to a corresponding system (e.g. a communication node), a corresponding network as well as a related computer program product, loadable in the memory of at least one computer and including software code portions for performing the steps of the method of the invention when the product is run on a computer. As used herein, reference to such a computer program product is intended to be equivalent to reference to a computer-readable medium containing instructions for controlling a computer system to coordinate the performance of the method of the invention. Reference to "at least one computer" is evidently intended to highlight the possibility for the present invention to be implemented in a distributed/ modular fashion.

The claims are an integral part of the disclosure of the invention provided herein.

An embodiment of the invention thus provides the capability of effecting path switching based on quality parameters, along with the capability of retrieving the related information from intermediate nodes of the path, and with the capability of effecting path switching without adversely affecting traffic.

An embodiment of the invention provides a node in a communication network, wherein the node includes multiple packet interfaces and path protection support capable of sending the same information stream to at least two different interfaces and to select the incoming interface among at least two interfaces providing the same information stream, wherein the selection made by this communication node (acting as a decision making node) is based on a quality parameter measured locally or obtained from other nodes (called measuring nodes) located in each of the alternative communication paths.

In an embodiment, the measurements obtained from plural measuring nodes each located in a respective one of the alternative communication paths are received and compared to identify the path providing the better/best quality parameter value. In an embodiment, a single measurement at a time obtained from a single measuring node located in one of the alternative communication paths is received and compared with the quality parameter of the path currently in use to check whether switching to the path to which the parameter just measured refers may provide better performance.

Various embodiments provide for the quality parameter being the BER (Bit Error Rate), throughput and/or latency.

In an embodiment, the quality parameter is periodically sent by the measuring node(s) to the decision making node.

In an embodiment, the quality parameter may be obtained from the measuring node(s) as a result of explicit requests issued by the decision making node at appropriate times.

In an embodiment, the two paths (main and back-up) transport exactly the same traffic flow and switching is rendered hitless by compensating differential delay among paths in switching nodes.

### Brief description of the annexed drawings

The invention will now be described, by way of example only, with reference to the enclosed figures of drawing, wherein:
- Figure 1 is a schematic representation of two switching nodes in a communication network, and
- Figure 2 further details a practical implementation of the arrangement of figure 1 in conformity with the arrangement described herein.

### Detailed description of preferred embodiments of the invention

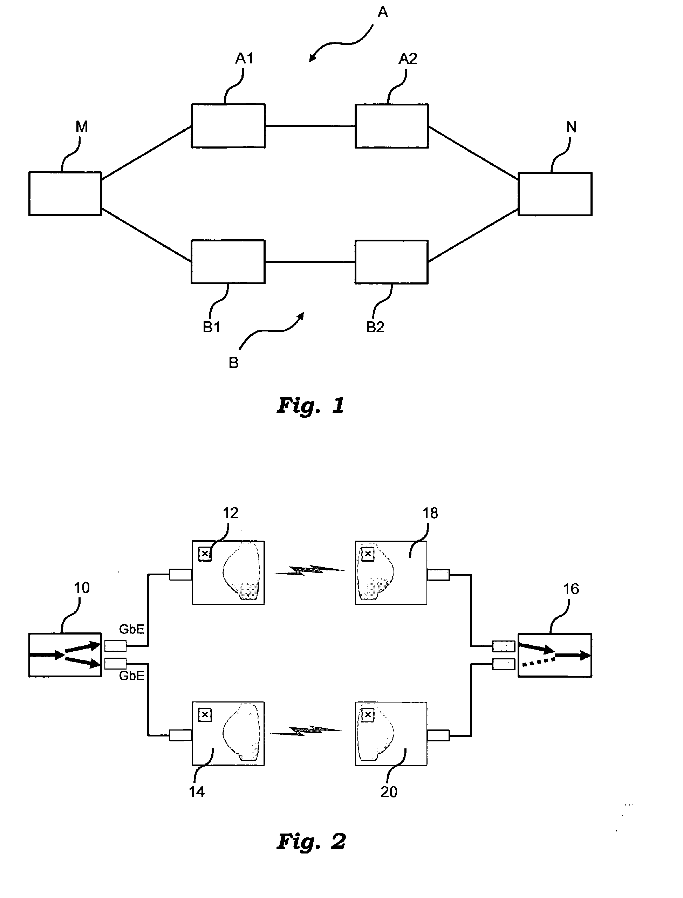

As indicated, Figure 1 is a schematic representation of two switching nodes, M and N, respectively, in a communication network with distributed switching intelligence.

The nodes M and N may communicate through a (main) path A - e.g. via intermediate nodes A1 and A2 - and via a backup path B - e.g. via intermediate nodes B1 and B2, here assumed to be all different from A1 and A2 for the sake of simplicity.

If continuity of path A is broken, M and N will recognize the situation and path B will take over.

The principles and details of such a takeover process are known in the art and do not require to be described in detail herein.

As better detailed in the following, in an exemplary embodiment in a radio environment as represented in figure 2, the nodes M and N may include radio link end points including:
- on the transmission side, a transmitter or TX chain (Layer 2 or L2 device) 10 having associated TX OutDoor Units or Outdoor Device Units (briefly ODUs) 12 and 14; and
- on the receiver side, a receiver or RX chain (L2 device) 16 having associated RX ODUs 18 and 20.

While the ODUs 12 and 18, on the one side, and the ODUs 14 and 20, on the other side, will generally identify the main path A and the backup path B, respectively, paths A and B can be active at the same time and can have a different quality measures (in addition to a purely working/non working status).

Transmission thus takes place in parallel on both paths A and B, and the node M or N acting as the receiver will take the decision as to which path to adopt in each direction.

Such a decision may be taken on the basis of quality parameters selected out e.g. the current throughput, latency or BER.

These quality measures may be available at M and N.

In some circumstances, however, quality measures are only available at the intermediate nodes e.g. A1, A2, B1 and B2. In the exemplary arrangement described herein, steps are taken to allow under these circumstances the nodes M and/or N to receive information about link quality from any of the intermediate nodes A1, A2, B1 and/or B2 and take their decision on the basis of such information.

The decisions taken may be independent, and thus different, in the two directions (the nodes M and N take their decisions independently without signalling their choices to each other). This results in a faster response since the nodes M and N need not communicate to each other to choose a path jointly.

Another advantage lies in that links with different quality and varying quality can be handled; exemplary of these are frequency diversity radio links whose BER performance over time can be affected by selective fading, adaptive modulation links where capacity may change according to fading performance, and those networks where latency may change with congestion over different links.

Properly defined 802.3ah OAMPDU (Operation And Maintenance Protocol Data Unit) messages can be used for the purpose of communicating the quality perceived from the (radio) node - e.g. any of A1, A2, B1 and/or B2 - which is "aware" (quality aware node) of the quality parameter dictating the switching action to the node (i.e. M and/or N) that effects the switching (switching node).

The arrangement described herein also avoids traffic disruption during switching from one path to the other. In order to avoid traffic interruption during switching, the latency of the two paths is kept low and with values close enough to each other for the two paths. The node (M and/or N) acting as the receiving and switching node is configured (in a manner known per se) in order to be able to compensate for any differential delay thus performing "hitless" switching.

The exemplary embodiment illustrated in figure 2 refers to the possible use of Scalable ODUs (S-ODUs) as currently manufactured by the Applicant company.

Specifically, figure 2 relates to a 1+1 Frequency Diversity protection scheme assuming S-ODUs connected to Layer 2 devices.

Each pair of S-ODUs 12, 14 and 18, 20 is connected to a L2 device 10, 16 and both radio channels are active (data are sent over both radio links using different frequencies).

In the TX chain, the L2 device 10 is configured to operate in Duplicating Mode so that it splits the incoming signal on both GbE interfaces to serve both S-ODUs 12 and 14.

In the RX chain the L2 device 16 acts in Switch Mode: it selects the incoming signal to be provided out from one source. Both S-ODUs 18, 20 connected thereto will send Link Quality messages to the L2 device 16 which is the one that (on the basis of a known algorithm) takes the decision as to the (best) path to use. The algorithm result drives the Switch to select the best source.

Consequently, without prejudice to the underlying principles of the invention, the details and the embodiments may vary, even appreciably, with reference to what has been described by way of example only, without departing from the scope of the invention as defined by the annexed claims.

## Claims

1. A method of operating a packet communication network, wherein a stream of packets is transmissible between two nodes (M, N) over a transmission path therebetween, wherein said transmission path is selected out of at least two transmission paths (A, B) based on a switching decision taken by the receiving node (N) of said two nodes (M, N), acting as a decision making node, as a function of at least one quality parameter, the method including the steps of:
- measuring said at least one quality parameter at one measuring node selected out of said decision node and at least one of plural nodes (A1, A2, B1, B2) each located in a respective one of said at least two transmission paths (A, B), and
- if said at least one quality parameter is measured at said at least one of said plural nodes (A1, A2, B1, B2) as the measuring node, transmitting said at least one quality parameter as measured at said measuring node from said measuring node (A1, A2, B1, B2) to said decision node (N) thus making said at least one quality parameter available for said decision.

2. The method of claim 1, wherein said quality parameter is selected in the group consisting of BER, throughput, and latency.

3. The method of either of claims 1 or 2, including the steps of:
- measuring said at least one quality parameter at said least one of said plural nodes (A1, A2, B1, B2) as the measuring node, and
- sending at given times said at least one quality parameter as measured at said measuring node from said measuring node (A1, A2, B1, B2) to said decision making node (N).

4. The method of any of claims 1 to 3, including the steps of:
- said decision node (N) sending to said measuring node (A1, A2, B1, B2) requests for measures of said at least one quality parameter, and
- said measuring node (A1, A2, B1, B2) measuring said at least one quality parameter and sending said at least one quality parameter as measured at said measuring node (A1, A2, B1, B2) to said decision making node (N) to reciprocate said requests from said decision making node (N).

5. The method of any of the previous claims, including the steps of:
- configuring said at least two transmission paths (A, B) to transport the same traffic flow, and
- compensating differential delay among said at least two transmission paths (A, B) so that switching therebetween resulting from said switching decision taken by the receiving node (N) is hitless on traffic.

6. The method of any of the previous claims, wherein said at least one quality parameter as measured at said measuring node is transmitted from said measuring node (A1, A2, A3, A4) to said decision node (N) as Operation And Maintenance Protocol Data Unit messages.

7. A communication node for a packet communication network, wherein a stream of packets is transmissible between two nodes (M, N) over a transmission path, wherein said transmission path is selected out of at least two transmission paths (A, B) based on a switching decision taken by the receiving node (N) of said two nodes (M, N) as a function of at least one quality parameter, the node being configured for acting as the decision node (N) in the method of any of claims 1 to 6.

8. The node of claim 7, wherein the node includes multiple packet transmission (12, 14) and reception (18, 20) interfaces and a path protection support function (10, 16) whereby the node (M, N) is capable, based on said switching decision taken by the node itself, of sending said stream of packets to multiple packet transmission (12, 14) interfaces and receiving an incoming stream of packets on a selected one of said multiple packet reception (18, 20) interfaces.

9. A packet communication network, wherein a stream of packets is transmissible between two nodes (M, N) according to either of claims 7 or 8 over a transmission path therebetween.

10. A computer program product, loadable in the memory of at least one computer and including software code portions for performing the steps of the method of any of claims 1 to 6.
